(19) Europäisches Patentamt
European Patent Office
Office européen des brevets

(11) **EP 2 411 483 B1**

(12) **EUROPÄISCHE PATENTSCHRIFT**

(45) Veröffentlichungstag und Bekanntmachung des Hinweises auf die Patenterteilung:
**13.08.2014 Patentblatt 2014/33**

(21) Anmeldenummer: **10712001.6**

(22) Anmeldetag: **22.03.2010**

(51) Int Cl.:
*C09K 8/36* (2006.01)        *C09K 8/528* (2006.01)
*E21B 33/14* (2006.01)        *E21B 37/06* (2006.01)

(86) Internationale Anmeldenummer:
**PCT/EP2010/001775**

(87) Internationale Veröffentlichungsnummer:
**WO 2010/108640 (30.09.2010 Gazette 2010/39)**

(54) **EMULSIONSBASIERTE REINIGUNGSZUSAMMENSETZUNG FÜR ÖLFELDANWENDUNGEN**

EMULSION-BASED CLEANING COMPOSITION FOR OILFIELD APPLICATIONS

COMPOSITION NETTOYANTE À BASE D'UNE ÉMULSION POUR DES APPLICATIONS SUR LES CHAMPS PÉTROLIERS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.03.2009 DE 102009014119**

(43) Veröffentlichungstag der Anmeldung:
**01.02.2012 Patentblatt 2012/05**

(73) Patentinhaber: **Emery Oleochemicals GmbH**
**40589 Düsseldorf (DE)**

(72) Erfinder:
• **MÜLLER, Heinz**
**40789 Monheim (DE)**
• **MÄKER, Diana**
**40822 Mettmann (DE)**

(74) Vertreter: **Kinkeldey, Daniela**
**Bird & Bird LLP**
**Maximiliansplatz 22**
**80333 München (DE)**

(56) Entgegenhaltungen:
WO-A1-01/42387        WO-A1-98/18881
DE-A1- 19 643 857        US-A1- 2004 082 483

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 411 483 B1

**Beschreibung**

Die vorliegende Erfindung betrifft eine Emulsion und die Verwendung einer Emulsion.

Beim Erbohren und Fördern von Erdöl- oder Erdgasvorkommen müssen an vielen Stellen Reinigungsschritte eingefügt werden, um einen problemlosen Ablauf des Bohr- und Förderprozesses zu gewährleisten. So muss das Bohrloch nach der eigentlichen Bohrung für die Förderung von Öl oder Gas vorbereitet werden (Komplettierung). Dazu wird zur Stabilisierung des Bohrlochs ein äußeres Rohr, das so genannte "casing" oder Futterohr eingebracht, und einzementiert. Der Zement wird in einer wässrigen, flüssigen Form durch das Rohr geleitet, tritt am unteren Ende des Casings aus und erhärtet zwischen Bohrlochwand und äußerem Rohr. Um einen optimalen Zementierungsprozess zu gewährleisten, ist es not-wendig die Bohrlochwand und die Casings von anhaftenden Resten der Bohrspülung und feinteiligen anhaftenden Feststoffen zu befreien. Anderenfalls besteht die Gefahr, dass Hohlräume oder Kanäle in der Betonschicht entstehen, die die Stabilität des Betons verringern. Außerdem können Reste der Bohrspülung mit dem Zement eine gelatinöse Masse ausbilden, die das Abbinden des Zements verhindert, was ebenfalls zu einer verringerten Stabilität des Zementmantels führt.

Nachdem das Casing in das Bohrloch eingebracht worden ist, wird das eigentliche Förderrohr, das einen kleineren Durchmesser als das Casing hat, installiert. Zwischen die äußere Wand des Förderrohrs und der inneren Wand des Casings wird noch eine Dichtungsflüssigkeit eingebracht. Vor dem Einbringen der Dichtungsflüssigkeit, dem so genannten "packer-fluid", wird der Ringraum zwischen Casing und Förderrohr gereinigt, insbesondere müssen alle feinteiligen Feststoffe, die noch an der Casing- oder Förderrohrwand anhaften, entfernt werden, um die Leistung der Dichtflüssigkeit zu gewährleisten.

Die Auswahl des für die oben geschilderten Aufgaben geeigneten Reinigungsmittels ist auch von der Art der eingesetzten Bohrspülung abhängig. Man kann prinzipiell zwischen wasser- und ölbasierten Spülungen unterscheiden. Heute werden häufig ölbasierte Spülungen eingesetzt, entweder als sogenannte "true-oil-muds", d.h. Spülungen, die kein oder nur untergeordnete Mengen dispergiertes Wasser enthalten, oder so genannte "invert muds", die zwischen 5 und 45 Gew.-% Wasser als dispergierte Phase enthalten, also eine W/O-Emulsion ausbilden. Außerdem sind wasserbasierte O/W-Emulsionen bekannt, die in einer geschlossenen wässrigen Phase eine heterogen, feindisperse Ölphase enthalten. Als Ölphase werden üblicherweise Petroleumprodukte, wie Mineral- oder Dieselöle eingesetzt. Aufgrund der sich immer weiter verschärfenden ökologischen Anforderungen wurden aber in jüngerer Zeit auch synthetische Ölphasen entwickelt, die beispielsweise Ester bestimmter Fettsäuren enthalten. Bohrspülungen auf Basis derartiger Esteröle werden exemplarisch in den Druckschriften EP-A-0 386 636, EP-A-0 374 671 und EP-A-0 374 672 beschrieben, und zeigen gegenüber Petroleumprodukten in Bezug auf ihre biologischen Abbaubarkeit und Toxizität deutlich verbesserte Eigenschaften. Bei einigen Bohrspülungen auf Basis synthetischer Ester kann man die Bildung klebrigen Rückständen auf Metalloberflächen bzw. der Bohrlochwand beobachten, die ebenfalls zu störenden Ablagerungen führen können.

Die Reinigungsmittel werden, ähnlich wie der Zement beim Zementierungsprozess, in flüssiger Form durch das Bohrgestänge nach unten gepumpt, treten an der Sohle des Bohrlochs aus und werden im Ringraum zwischen Rohr und Bohrlochwand nach oben gespült. Dabei lösen sie Reste der Bohrspülung und an den Oberflächen anhaftende Feststoffteilchen ab und transportieren diese aus dem Bohrloch heraus. Ein derartiges Verfahren wird beispielsweise in der WO-A-94/29570 im Detail beschrieben. Man setzt die Mittel üblicherweise in Form von wässrigen oder nichtwässrigen Lösungen bzw. Dispersionen ein. Sie können aber auch in konzentrierter, fester oder flüssiger Form direkt der Bohrspülung zugesetzt werden. Reinigungsmittel für die oben geschilderten Aufgaben können beispielsweise Mischungen von Citronensäure, Pyrophosphat und Kaliumsalzen sein, die in fester oder gelöster Form verwendet werden. Diese Mittel eignen sich sowohl für true-oil- als auch für Invert-Bohrspülungen.

Die WO-A-95/17244 beschreibt eine Zusammensetzung zum Reinigen von ölverschmutzten Oberflächen, die Tenside welche HLB-Werte von mindestens 8 aufweisen in Kombination mit einem Öl enthalten. Als bevorzugte Tenside werden ethoxylierte Sorbitanfettsäureester genannt. Nun zeigen Mittel auf Basis von ethoxylierten Sorbitanfettsäureestern zwar eine gute Reinigungswirkung, aber in Bezug auf die biologische Abbaubarkeit und die Toxizität können derartige Mittel noch nicht alle Anforderungen, die eine sich zunehmend verschärfende Umweltgesetzgebung fordert, erfüllen.

In der WO-A-98/19043 werden spezifische Sojapolyolalkoxylate als hochwirksame Reinigungsmittel für Bohrlöcher bzw. Bohrgeräte offenbart, während WO-A-2006/007977 die Verwendung von Lithiumsalzen von Fettalkoholsulfaten zum Reinigen von Bohrlöchern, Bohrgeräten oder Bohrklein lehrt.

US 2004/082483 A1 betrifft ein Verfahren zur Verringerung der Viskosität von umgekehrten Emulsionen (invert emulsions) und Öl-basierten Bohrspülungen.

WO 98/18881 A1 beschreibt fliess- und pumpfähige Arbeitsmittel für den Erdreichaufschluss, insbesondere ein fliess- und pumpfähiges Mehrkomponentengemisch auf Basis einer mehrphasigen Abmischung von Wasser und Öl, enthaltend Emulgatoren und gewünschtenfalls zusätzlich weitere lösliche, emulgierbare und/oder dispergierbare Hilfsstoffe.

DE 196 43 857 A1 offenbart die Verwendung von biologisch abbaubaren Alkoxylierungsprodukten zur Reinigung von Bohrlöchern, Bohrgeräten oder Bohrklein.

WO-A-01/42387 beschreibt Reinigungsmittel auf der Basis von Mikroemulsionen, welche unter anderem nichtionische Tenside als Additiv beinhalten. Der Nachteil des in dieser Druckschrift beschriebenen Reinigungsmittels besteht jedoch unter anderem in einer unbefriedigenden Reinigungswirkung. Auch weisen die in dieser Druckschrift beschriebenen Mikroemulsionen eine eher begrenzte Lagerstabilität aus, was sich unter anderem darin äußert, dass bereits nach wenigen Tagen der Lagerung eine Trennung der Mikroemulsion in zwei Phasen zu beobachten ist.

Der vorliegenden Erfindung lag daher die Aufgabe zugrunde, die sich aus dem Stand der Technik ergebenen Nachteile im Zusammenhang mit Reinigungsmitteln für die Ölfeldanwendung zu überwinden.

Insbesondere lag der vorliegenden Erfindung die Aufgabe zugrunde, eine Emulsion als Additiv für eine Spülzusammensetzung zum Reinigen von Bohrlöchern, Bohrgeräten oder Bohrklein anzugeben, welche die Reinigungswirkung im Vergleich zu herkömmlichen Spülzusammensetzungen erkennbar verbessert.

Weiterhin sollte sich die als Additiv für eine Spülzusammensetzung einsetzbare Emulsion im Vergleich zu den aus dem Stand der Technik bekannten Emulsionen durch eine verbesserte Lagerungsstabilität auszeichnen.

Einen Beitrag zur Lösung der eingangs genannten Aufgaben leistet die erfindungsgemäße Emulsion bestehend aus einer Ölphase und einer wässrigen Phase und beinhaltend als Emulsionskomponenten

($\alpha$1) 15 bis 40 Gew.-%, besonders bevorzugt 17,5 bis 35 Gew.-% und am meisten bevorzugt 20 bis 30 Gew.-% mindestens eines mit Wasser nicht mischbaren, organischen Lösungsmittels als Lösungsmittel der Ölphase,

($\alpha$2) 15 bis 40 Gew.-% besonders bevorzugt 20 bis 37,5 Gew.-% und am meisten bevorzugt 25 bis 35 Gew.-% Wasser als Lösungsmittel der wässrigen Phase,

($\alpha$3) 10 bis 40 Gew.-%, besonders bevorzugt 15 bis 37,5 Gew.-% und am meisten bevorzugt 20 bis 30 Gew.-% mindestens eines oberflächenaktiven Mittels,

($\alpha$4) 10 bis 40 Gew.-%, besonders bevorzugt 17,5 bis 35 Gew.-% und am meisten bevorzugt 20 bis 30 Gew.-% eines alkyoxlierten Fettalkohols, sowie

($\alpha$5) 0 bis 25 Gew.-%, besonders bevorzugt 0,01 bis 10 Gew.-% und am meisten bevorzugt 0,1 bis 1 Gew.-% mindestens eines weiteren Additives,

wobei die Gewichtsmengen der Komponenten ($\alpha$1) bis ($\alpha$5) jeweils auf das Gesamtgewicht der Emulsion bezogen sind und zusammen 100 Gew.-% ergeben, wobei das mindestens eine oberflächenaktive Mittel ($\alpha$3) ausgewählt ist aus der Gruppe bestehend aus Alkylpolyglykosiden, Mono-, Di- oder Triestern aus Glycerin und Fettsäuren und Mischungen aus mindestens zwei dieser Verbindungen.

Völlig überraschend, dafür aber nicht minder vorteilhaft, wurde festgestellt, dass sich die Reinigungswirkung herkömmlicher, als Reinigungsmittel eingesetzter Spülzusammensetzungen, welchen die vorstehend beschriebene Mikroemulsionen als Additiv zugesetzt wird, gegenüber einer Spülzusammensetzung, welchen eine herkömmliche, keinen alkyoxlierten Fettalkohol beinhaltende Emulsionen als Additiv zugesetzt wird, signifikant erhöhen lassen. Auch wird durch den Zusatz des alkoxylierten Fettalkohol als weitere Emulsionskomponente in einer Menge in einem Bereich von 10 bis 40 Gew.-% die Lagerungsstabilität der Emulsion erkennbar verbessert.

Bei der Emulsion kann es sich um eine Wasser-in-Öl-Emulsion oder um eine Ölin-Wasser-Emulsion handeln, wobei die Art der Emulsion bei gegebenem organischen Lösungsmittel und gegebenem Verhältnis von organischem Lösungsmittel zu Wasser insbesondere von der Art und Menge des eingesetzten, oberflächenaktiven Mittels abhängig ist. Weiterhin kann die Emulsion als Nanoemulsion oder als Mikroemulsion vorliegen, bei der 90 Volumen-% der Tropfen der wässrigen Phase bzw. der Tropfen der Ölphase eine Tropfengröße von weniger als 500 $\mu$m, vorzugsweise weniger als 400 $\mu$m und am meisten bevorzugt weniger als 300 $\mu$m aufweisen, 50 Volumen-% Tropfen der wässrigen Phase bzw. der Tropfen der Ölphase eine Tropfengröße von weniger als 400 $\mu$m, vorzugsweise weniger als 300 $\mu$m und am meisten bevorzugt weniger als 200 $\mu$m aufweisen, und 10 Volumen-% Tropfen der wässrigen Phase bzw. der Tropfen der Ölphase eine Tropfengröße von weniger als 300 $\mu$m, vorzugsweise weniger als 200 $\mu$m und am meisten bevorzugt weniger als 150 $\mu$m aufweisen. Besonders bevorzugt weist die Emulsion eine Tropfengröße der diskontinuierlichen Phase von weniger als 0,3 $\mu$m auf.

Die vorstehend verwendeten Begriffe *"Mikroemulsion"* und *"Nanoemulsion"* kennzeichnen erfindungsgemäß Emulsionen, welche Tropfen im Mikrometerbzw. Nanometerbereich beinhalten, wobei es eine gewisse Überscheidung dieser beiden Bereiche und somit auch dieser beiden Begriffe geben kann. Gemäß eines Teiles der Fachliteratur und auch des Bohrspülungen betreffenden Standes der Technik werden unter Mikroemulsionen vorzugsweise solche Emulsionen verstanden, die sich spontan bei einer Kombination der Emulsionskomponenten bilden, wohingegen die Bildung von Nanoemulsionen üblicherweise das Zuführen von Energie, beispielsweise in Form eines Homogenisierens, insbesondere in Form einer Hochdruckhomogenisation, erfordert.

Als mit Wasser nicht mischbares, organisches Lösungsmittel ($\alpha$1) kommen alle dem Fachmann bekannten Lösungsmittel in Betracht, welche eine Reinigungswirkung aufweisen. Als Beispiele seien Parafine, interne Olefine, lineare Olefine, aromatische Kohlenwasserstoffe, Mineralöle, Carbonsäureester, insbesondere Fettsäureester, ganz besonders bevorzugt Triglyceride und Triacetin, Alkohole und Carbonate genannt.

Bevorzugte Paraffine sind dabei insbesondere Paraffine mit 5 bis 22 C-Atomen. Paraffine - korrekter bezeichnet als Alkane - sind bekanntermaßen gesättigte Kohlenwasserstoffe, die für die linearen bzw. verzweigten Vertreter der allgemeine Summenformel $C_nH_{2n+1}$ folgen. Die cyclischen Alkane folgen der allgemeinen Summenformel $C_nH_{2n}$. Besonders bevorzugt sind die linearen und verzweigten Paraffine, wohingegen cyclische Paraffine weniger bevorzugt sind. Insbesondere bevorzugt ist die Verwendung von verzweigten Paraffinen. Weiterhin sind solche Paraffine bevorzugt, die bei Raumtemperatur flüssig sind, also solche mit 5 bis 16 C-Atomen pro Molekül. Es kann aber auch bevorzugt sein Paraffine mit 17 bis 22 C-Atome, die eine wachsartige Konsistenz aufweise einzusetzen. Bevorzugt ist es aber, Mischungen der verschiedenen Paraffine einzusetzen, wobei es besonders bevorzugt ist, wenn diese Mischungen bei 21°C noch flüssig sind. Solche Mischungen können z.B. aus Paraffinen mit 10 bis 21 C-Atomen gebildet werden. Paraffine sind besonders bevorzugte Öl-Phasen - alleine oder als Mischungsbestandteil mit weiteren Öl-Phasen - in Bohrspülungen.

Als interne Olefine (im Weiteren als IO abgekürzt) können alle dem Fachmann bekannten und insbesondere für den Einsatz Bohrspülungen oder Bohrlochreinigern geeigneten internen Olefine eingesetzt werden. Diese IOs können durch alle dem Fachmann dazu bekannten Verfahren hergestellt werden. Die EP 0 787 706 A1 beschreibt beispielsweise ein Verfahren zur Synthese von IOs durch Isomerisierung von Alpha-Olefinen an Sulfon- oder Persulfonsäuren. Charakteristisch ist, dass die so gewonnen IO linear sind und mindestens eine olefinische Doppelbindung enthalten, die sich nicht in der Alpha-Position der Alkylkette befindet. Vorzugsweise werden erfindungsgemäß solche IO beziehungsweise IO-Gemische verwendet, welche IO mit 12 bis 30 C-Atomen im Molekül, vorzugsweise mit 14 bis 24 C-Atomen und insbesondere mit bis zu 20 C-Atomen im Molekül enthalten.

Als lineare alpha-Olefine (kurz LAO) werden vorzugsweise in 1-Postion ("alpha-C-Atom") unverzweigte, ungesättigte Kohlenwasserstoffe eingesetzt. Sie können naturstoffbasiert sein, werden aber insbesondere in großem Umfange auch synthetisch gewonnen. Naturstoffbasierte LAO werden durch Dehydratisierung naturstoffbasierter Fettalkohole als lineare Produkte mit geradkettiger Kohlenstoffzahl gewonnen. Auch die auf synthetischem Wege gewonnenen LAO - hergestellt durch Oligomerisation von Ethylen - enthalten häufig geradkettige Kohlenstoffzahlen in der Kette, es sind heute aber auch Verfahren zur Herstellung von ungradzahligen alpha-Olefinen bekannt. Im Sinne der erfindungsgemäßen Definition weisen - aufgrund ihrer Flüchtigkeit - in der Regel wenigstens 10, vorzugsweise wenigstens 12 bis 14 C-Atome im Molekül auf. Die Obergrenze der bei Raumtemperatur fließfähigen LAO liegt im Bereich von $C_{18}$ bis $C_{20}$. Diese Obergrenze ist aber für die Verwertbarkeit dieser Stoffklasse im Rahmen der Erfindung nicht einschränkend. Die Obergrenze geeigneter LAO-Verbindungen für den Einsatz im Rahmen der erfindungsgemäßen Lehre liegt also deutlich über dem zuvor genannten Grenzwert von $C_{18}$ bis $C_{20}$ und kann beispielsweise $C_{30}$ erreichen.

Als aromatische Kohlenwasserstoffe können insbesondere Verbindungen ausgewählt aus der Gruppe bestehend aus Toluol, Benzol, Xylol und Mesitylen verwendet werden.

Erfindungsgemäß bevorzugte Mineralöle sind insbesondere die aus mineralischen Rohstoffen (Erdöl, Braun- und Steinkohlen, Holz oder Torf) gewonnenen flüssigen Destillationsprodukte, die im Wesentlichen aus Gemischen von gesättigten Kohlenwasserstoffen bestehen. Vorzugsweise enthalten die Mineralöle nur geringe Mengen an aromatischen Kohlenwasserstoffen, vorzugsweise weniger als 3 Gew.-%. Bevorzugt sind bei 21 °C flüssige Mineralöle auf Basis von Erdöl. Die Mineralöle weisen vorzugsweise Siedepunkte von 180 bis 300°C auf.

Erfindungsgemäß bevorzugte Carbonsäureester sind insbesondere diejenigen Ester, die durch Umsetzung von Fettsäuren oder Hydroxyfettsäuren mit Mono-, Di- oder Triolen, besonderes bevorzugt mit Methanol, Ethanol, Glycerin oder Mischung, welche neben Glycerin auch Di- oder Triglycerin beinhalten, erhalten werden. Erfindungsgemäß besonders bevorzugt ist der Einsatz von Estern, die durch Umsetzung von Mono-, Di- oder Triolen mit Fettsäuren ausgewählt aus der Gruppe bestehend aus Capronsäure, Önanthsäure, Caprylsäure, Pelargonsäure, Caprinsäure, Laurinsäure, Myristinsäure, Fischöl, Palmitinsäure, Pelagonsäure, Margarinsäure, Stearinsäure, Isostearinsäure, Arachinsäure, Behensäure, Lignocerinsäure, Cerotinsäure, Undecylensäure, Ölsäure, Elaidinsäure, Vaccensäure, Icosensäure, Rapsöl, Cetoleinsäure, Erucasäure, Nervonsäure, Linolsäure, Linolensäure, Arachidonsäure, Timnodonsäure, Clupanodonsäure und Cervonsäure oder mit Hydroxyfettsäuren ausgewählt aus der Gruppe bestehend aus Ricinolsäure, 12-Hydroxystearinsäure, hydrierte Kastorölfettsäuren (Fettsäuren, die kleine Mengen von Stearinsäure und Palmitinsäure, ebenso wie 12-Hydroxystearinsäure enthalten), Sabininsäure, 2-Hydroxytetradecansäure, Ipurolinsäure (3,11-Dihydroxytetradecansäure, 2-Hydroxyhexadecansäure, Jalapinolsäure, Juniperinsäure, Ambrettolsäure, Aleuritinsäure, 2-Hydroxyoctadecansäure, 18-Hydroxyoctadecansäure, 9,10-Dihydroxyoctadecansäure, Kamiolensäure, Ferronsäure, Cerebronsäure, 9-Hydroxystearinsäure und 10-Hydroxystearinsaure erhalten worden sind, wobei insbesondere die Methyl- und Ethylester der vorstehend genannten Fettsäuren und Hydroxyfettsäuren besonders bevorzugt sind. Weitere, geeignete Carbonsäureester sind beispielsweise Ester von 2-Hexyl-$C_2$-$C_{18}$-Carbonsäuren

Als Alkohole können in der Emulsion ($\alpha$1) insbesondere Alkohole ausgewählt aus der Gruppe bestehend aus $C_6$- bis $C_{30}$-Alkanolen, besonders bevorzugt $C_7$- bis $C_{20}$-Alkanolen und am meisten bevorzugt $C_8$- bis $C_{15}$-Alkanolen, wie beispielsweise Hexanol, 2-Ethylhexanol, Heptanol, Oktanol und Nonanol enthalten sein. Vorteilhaft ist insbesondere der Einsatz von Fettalkoholen, wobei als Fettalkohol vorzugsweise diejenigen Fettalkohole eingesetzt werden, die durch Reduktion der vorstehend genannten Fettsäuren erhalten werden können. Bevorzugte Carbonate sind Kohlensäureester von Fettalkoholen mit 8 bis 22 C-Atomen, vorzugsweise die Diester der Kohlensäure. Solche Verbindungen und deren Einsatz als ÖlPhase für Bohrspülmittel sind beschrieben in der DE 40 18 228 A1.

Neben den vorstehend genannten organischen Lösungsmitteln seien als weitere geeignete Lösungsmittel insbesondere diejenigen Lösungsmittel genannt, die in der WO-A-01/42387 genannt werden.

Die vorstehend genannten organischen Lösungsmittel können alleine oder in Mischungen aus zwei oder mehr organischen Lösungsmitteln eingesetzt werden, um das organische Lösungsmittel ($\alpha$1) der Ölphase zu bilden.

Das Wasser ($\alpha$2) für die wässrige Phase der erfindungsgemäßen Emulsion kann frisches, Leitungs-, Fluss-, See-, erzeugtes oder Formationswasser sein. Die wässerige Phase kann eine Gesamtsalzhaltigkeit von 0 bis 250 g/l, beispielsweise 5 bis 50 g/l und einen pH-Wert von 0,5 bis 9 aufweisen. Wenn die wässerige Phase eine Seewasserlösung einer stark sauren Förderchemikalie, wie beispielsweise einen Ablagerungsinhibitor, umfasst, kann es möglich sein, dass diese wässerige Phase einen stark sauren pH von 0,1 bis 1 aufweist. In solchen Fällen kann es notwendig sein, den Säuregrad der wässerigen Phase unter Verwendung von Ammoniumhydroxid oder einem Alkalimetallhydroxid, insbesondere Natriumhydroxid, Kaliumhydroxid oder Lithiumhydroxid, zu neutralisieren, um den pH der Formulierung innerhalb eines bevorzugten Bereiches von 2 bis 6 einzustellen. Vorzugsweise wird die wässerige Phase neutralisiert, bevor sie mit der organischen Phase und dem oberflächenaktiven Mittel gemischt wird, um die Mikroemulsion zu bilden

Als oberflächenaktives Mittel ($\alpha$3) können alle dem Fachmann bekannten erfindungsgemäßen Tenside eingesetzt werden, welche zur Herstellung von Emulsionen für die Ölfeldanwendung, insbesondere zur Herstellung von Mikroemulsionen, eingesetzt werden können und welche in diesen Zusammensetzungen als Emulgator wirken. Es werden jedoch vorzugsweise oberflächenaktive Mittel ($\alpha$3) gewählt, bei denen es sich nicht um einen alkyoxlierten Fettalkohol, vorzugsweise nicht um einen alkoxylierten Fettalkohol handelt, wie er nachfolgend im Zusammenhang mit der Komponente ($\alpha$4) beschrieben ist.

Als Tenside können anionische, nichtionischem zwitterionische oder kationische Tenside Verwendung finden. Bevorzugt sind aber die nichtionischen und die anionischen Tenside. Typische Beispiele für nichtionische Tenside sind partiell oxidierte Alk(en)yloligoglykoside

Erfindungsgemäß besonders bevorzugte, als Emulgatoren wirkende, oberflächenaktive Mittel ($\alpha$3) sind insbesondere den nachfolgenden Stoffklassen zuordnen: Ein weiteres Beispiel für entsprechende Emulgatorkomponenten sind Alkyl(poly)glykoside langkettiger Alkohole, meist mit 8 und mehr C-Atomen. Die Mitverwendung heute handelsüblicher Alkyl(poly)glykosid-Verbindungen (APG-Verbindungen) als Emulgatorkomponenten im erfindungsgemäßen Sinn kann unter anderem deswegen besonders interessant sein, weil es sich hier um eine Emulgatorklasse besonders ausgeprägter Ökoverträglichkeit handelt.

Erfindungsgemäß besonders bevorzugt ist der Einsatz von Alkylpolyglykosiden, Mono-, Di- oder Triestern aus Glycerin und Fettsäuren oder Mischungen aus mindestens zwei dieser Verbindungen als oberflächenaktives Mittel ($\alpha$3), wobei in diesem Zusammenhang eine Mischung aus einem Alkylpolyglykosid und einem Monoester aus Glycerin und einer Fettsäuren, insbesondere aus Glycerin und Ölsäure, am meisten bevorzugt ist.

Die erfindungsgemäße Emulsion beinhaltet neben der vorstehend beschriebenen Emulsionskomponenten ($\alpha$1) bis ($\alpha$3) einen alkyoxlierten Fettalkohols ($\alpha$4).

Erfindungsgemäß geeignete alkoxylierte Fettalkohole sind Fettalkohole, die mit 2 bis 10 Ethylenoxid-Einheiten, besonders bevorzugt mit 2 bis 8 Ethylenoxid-Einheiten, noch mehr bevorzugt mit 2 bis 6 Ethylenoxid-Einheiten und am meisten bevorzugt mit 4 Ethylenoxid-Einheiten ethoxyliert wurden. Gemäß einer besonderen Ausführungsform der erfindungsgemäßen Emulsion kann das als Emulsionskomponente ($\alpha$4) eingesetzte, alkoxylierte Fettalkohol aber auch nur eine Alkylenoxid-Einheit, vorzugsweise eine Ethylenoxid- und/oder eine Propylenoxid-Einheit aufweisen.

Als Fettalkohole kommen insbesondere $C_6$- bis $C_{18}$-Fettalkohole, noch mehr bevorzugt $C_8$- oder $C_{12}$- bis $C_{14}$-Fettalkohole in Betracht. Geeignete Fettalkohole sind beispielsweise ausgewählt aus der Gruppe bestehend aus Capronalkohol, Caprylalkohol, Caprinalkohol, 2-Ethylhexylalkohol, Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol und Erucylalkohol.

Erfindungsgemäß besonders bevorzugte alkoxylierte Fettalkohole ($\alpha$4) sind insbesondere mit 4 Ethylenoxid-Einheiten ethoxylierte $C_8$-Fettalkohole, wie sie beispielsweise unter der Handelsbezeichnung Dehydol® 04 von der Firma Cognis erhältlich sind. Erfindungsgemäß insbesondere geeignete alkoxylierte Fettalkohole ($\alpha$4) sind weiterhin solche, welche auf einem mit 6 Ethylenoxid-Einheiten alkoxylierten $C_8$- bis $C_{14}$-Fettalkohol oder auf einem mit 5 Ethylenoxid-Einheiten und 4 Propylenoxid-Einheiten alkoxylierten $C_{12}$- bis $C_{14}$-Fettalkohol basieren. Weiterhin eingesetzt werden kann beispielsweise mit 6 Ethylenoxid-Einheiten alkoxylierter Decylalkohol.

Weiterhin beinhaltet die erfindungsgemäße Emulsion gegebenenfalls mindestens ein weiteres Additiv ($\alpha$5).

Als Additiv können dabei grundsätzlich alle Additive eingesetzt werden, welche üblicherweise in Reinigungszusammensetzungen für die Ölfeldanwendung enthalten sind. Zu diesen Additiven gehören insbesondere Beschwerungsmittel, fluidloss Additive, viskositäts-regulierende Additive, Netzmittel, Salze, Biozide, Korrosionsinhibitoren, und/oder eine Alkalireserve in Betracht. Es gelten hier die allgemeinen Gesetzmäßigkeiten für die Zusammensetzung der jeweiligen Behandlungsflüssigkeiten.

Klassische Additive können sein: fluid-loss-Additive, Strukturviskosität aufbauende lösliche und/oder unlösliche Stoffe, Alkalireserven, Mittel zur Inhibierung des unerwünschten Wasseraustausches zwischen erbohrten Formationen - z. B wasserquellbare Tone und/oder Salzschichten - und der wässrigen Lösung, Biozide, beispielsweise zur Hemmung des bakteriellen Befalls der wässrigen Zusammensetzung, und dergleichen. Als Mittel zum Aufbau der Strukturviskosität, die gleichzeitig auch als fluid-loss-Additive wirken, kommen insbesondere Bentonit bzw. hydrophobierter Bentonit in Betracht.

Auch die Mitverwendung organischer Polymerverbindungen natürlichen und/oder synthetischen Ursprungs kann sich als vorteilhaft erweisen. Zu nennen sind hier insbesondere Stärke oder chemisch modifizierte Stärken, Cellulosederivate wie Carboxymethylcellulose, Guargum, Synthangum oder auch rein synthetische wasserlösliche und/oder wasserdispergierbare Polymerverbindungen, insbesondere von der Art der hochmolekularen Polyacrylamidverbindungen mit oder ohne anionische bzw. kationische Modifikation.

Weiterhin als Additiv einsetzbar sind Verdünner zur Viskositätsregulierung, wobei diese Verdünner organischer oder anorganischer Natur sein können und beispielhaft unter anderem Tannine und/oder Qebracho-Extrak, Lignit sowie Lignitderivate, insbesondere Lignosulfonate, umfassen.

Weiterhin als Additiv einsetzbar sind auch organische Carbonsäuren, wie beispielsweise Zitronensäure, Milchsäure, Äpfelsäure, Buttersäure, Maleinsäure, Fumarsäure, Propionsäure oder Malonsäure, wobei der Einsatz von Zitronensäure und Milchsäure besonders bevorzugt und der Einsatz von Zitronensäure am meisten bevorzugt ist.

Auch mit Wasser mischbare Lösungsmittel, wie Methanol, Ethanol, n-Propanol, iso-Propanol, n-Butanol, iso-Butanol, tert-Butanol, Butylmonoglykolether, Butyldiglykolether, Butyltriglykolether, Ethylenglykolmonobutylether und Ethylenglykol können als Additiv eingesetzt werden. Ohne an eine Theorie gebunden zu sein, wird angenommen, dass die Gegenwart eines wassermischbaren Lösungsmittels in der wässerigen Phase die Mikroemulsion so stabilisiert, dass weniger oberflächenaktives Mittel erforderlich ist, um eine stabile Mikroemulsion zu bilden. Die Menge an wassermischbarem Lösungsmittel, die in der wässerigen Phase vorliegen kann, liegt in dem Bereich von 0,5 bis 50 Gew.-%, vorzugsweise 5 bis 30 Gew.-%, basierend auf dem Gesamtgewicht an Wasser und wassermischbarem Lösungsmittel.

Ein Verfahren zur Herstellung einer erfindungsgemäßen Emulsion, kann die Verfahrensschritte umfassen:

(I) Bereitstellen der Emulsionskomponenten ($\alpha$1) bis ($\alpha$4) und gegebenenfalls ($\alpha$5), wie vorstehend beschrieben;

(II) Vermischen der Emulsionskomponenten unter Bedingungen, unter denen aus den Emulsionskomponenten eine klare Emulsion gebildet wird.

Dabei ist es bevorzugt, dass die einzelnen Emulsionskomponenten (organisches Lösungsmittel der Ölphase, Wasser, oberflächenaktives Mittel, alkoxylierter Fettalkohol und gegebenenfalls weitere Additive) in solchen Mengen miteinander in Kontakt gebracht werden, dass eine Emulsion beinhaltend

($\alpha$1) 15 bis 40 Gew.-%, besonders bevorzugt 17,5 bis 35 Gew.-% und am meisten bevorzugt 20 bis 30 Gew.-% des organischen Lösungsmittels,
($\alpha$2) 15 bis 40 Gew.-% besonders bevorzugt 20 bis 37,5 Gew.-% und am meisten bevorzugt 25 bis 35 Gew.-% Wasser,
($\alpha$3) 10 bis 40 Gew.-%, besonders bevorzugt 15 bis 37,5 Gew.-% und am meisten bevorzugt 20 bis 30 Gew.-% des oberflächenaktiven Mittels,
($\alpha$4) 10 bis 40 Gew.-%, besonders bevorzugt 17,5 bis 35 Gew.-% und am meisten bevorzugt 20 bis 30 Gew.-% des alkyoxlierten Fettalkohols, sowie
($\alpha$5) 0 bis 25 Gew.-%, besonders bevorzugt 0,01 bis 10 Gew.-% und am meisten bevorzugt 0,1 bis 1 Gew.-% des mindestens eines weiteren Additives,

wobei die Gewichtsmengen der Komponenten ($\alpha$1) bis ($\alpha$4) jeweils auf das Gesamtgewicht der Emulsion bezogen sind und 100 Gew.-% ergeben, wobei das mindestens eine oberflächenaktive Mittel ($\alpha$3) ausgewählt ist aus der Gruppe bestehend aus Alkylpolyglykosiden, Mono-, Di- oder Triestern aus Glycerin und Fettsäuren und Mischungen aus mindestens zwei dieser Verbindungen, erhalten wird.

Vorzugsweise liegen zur Herstellung der Emulsion alle Komponenten ($\alpha$1) bis ($\alpha$4) in flüssiger Form vor. Sofern einzelne Komponenten unter den Temperaturbedingungen der Emulsionsherstellung zumindest teilweise in fester Form vorliegen sollten, ist es vorteilhaft, diese Komponenten zunächst auf den Schmelzpunkt oder darüber hinaus zu erwärmen und auf diese Weise aufzuschmelzen und dann in geschmolzenem Zustand zur Herstellung der Emulsion einzusetzen.

Das in Kontakt bringen der Emulsionskomponenten im Verfahrensschritt II) erfolgt vorzugsweise durch die dem Fachmann zur Herstellung von Emulsionen, vorzugsweise von Mikroemulsionen mit den im Zusammenhang mit der erfindungsgemäßen Emulsion beschriebenen Eigenschaften, bekannten Mischverfahren. Denkbar ist beispielsweise die Herstellung solcher Mikroemulsionen mittels Hochdruckhomogenisation oder mittels Ultraschall.

Dabei ist es besonders bevorzugt, dass zunächst die Emulsionskomponenten ($\alpha$1) bis ($\alpha$3) und gegebenenfalls ($\alpha$5) unter Bildung einer Emulsion miteinander in Kontakt gebracht werden und erst dann die so erhaltene Emulsion mit der Komponente ($\alpha$4) vermischt wird, wobei im Anschluss an dieses Vermischen erneut eine Hochdruckhomogenisation oder eine Ultraschallbehandlung durchgeführt werden kann, um eine Mikroemulsion zu bilden.

Einen Beitrag zur Lösung der eingangs genannten Aufgaben leistet auch die Verwendung der vorstehend beschriebenen, erfindungsgemäßen Emulsion oder der durch das vorstehend beschriebe Verfahren erhältlichen Emulsion als Additiv in einer Spülzusammensetzung zur Reinigung von Bohrlöchern, insbesondere der Wände von Bohrlöchern, von Förder- oder Futterrohren oder von Wänden des Casings, sowie zum Reinigen von Bohrgeräten oder von Bohrklein.

In diesem Zusammenhang ist es insbesondere bevorzugt, dass die erfindungsgemäße Emulsion oder die durch das Verfahren erhältliche Emulsion in einer Menge in einem Bereich von 1 bis 20 Gew.-%, besonders bevorzugt in einer Menge in einem Bereich von 2,5 bis 15 Gew.-% und am meisten bevorzugt in einem Bereich von 5 bis 10 Gew.-%, jeweils bezogen auf das Gesamtgewicht der Spülzusammensetzung, eingesetzt wird.

Weiterhin ist es erfindungsgemäß bevorzugt, dass es sich bei der Spülzusammensetzung um eine wässrige Spülzusammensetzung handelt, welche vorzugsweise zu mindestens 50 Gew.-%, noch mehr bevorzugt zu mindestens 75 Gew.-% und am meisten bevorzugt zu mindestens 90 Gew.-%, jeweils bezogen auf das Gesamtgewicht der Spülzusammensetzung, auf Wasser basiert. Solche wässrigen Spülzusammensetzungen können beispielsweise erhalten werden, in dem die erfindungsgemäße Emulsion oder die durch das Verfahren erhältliche Emulsion mit Wasser, beispielsweise mit Leitungswasser oder Meerwasser, vermischt werden.

Unter Bohrgeräte fallen beispielsweise Rohrleitungen und Pipelines, aber auch Werkzeuge, die bei Bohrprozessen verwendet werden und die mit anderen Bohrflüssigkeiten und/oder Erdöl in Kontakt kommen. Zur Reinigung der Bohrgeräte wird die die erfindungsgemäße Emulsion oder die durch das erfindungsgemäße Verfahren erhältliche beinhaltende Spülzusammensetzung auf die Oberflächen der Gegenstände aufgesprüht oder aufgetragen oder die zu reinigenden Gegenstände werden in die die erfindungsgemäße Emulsion oder die durch das erfindungsgemäße Verfahren erhältliche beinhaltende Spülzusammensetzung eingetaucht. Dabei lösen sich die Verunreinigungen von den Oberflächen. Anschließend werden die Oberflächen so mit Wasser in Kontakt gebracht, dass die Mittel zusammen mit den Verunreinigungen entfernt werden, beispielsweise indem die Oberfläche mit einem Wasserstrahl abgespritzt wird.

Weiterhin lässt sich die die erfindungsgemäße Emulsion oder die durch das erfindungsgemäße Verfahren erhältliche einhaltende Spülzusammensetzung zum Reinigen von Bohrklein verwenden, den sogenannten *"cuttings"*. Diese fallen beim Erbohren an und müssen bei off-shore-Bohrungen auf den Seeboden in der Umgebung der Bohrplattform abgelagert werden, was zu einem starken Eintrag von Mineralöl in die Umwelt führen kann. Um eine ökologische Belastung des Meeres weitgehend zu vermeiden, werden die cuttings vorher gereinigt und von den Resten der Bohrspülung befreit. Die die erfindungsgemäße Emulsion oder die durch das erfindungsgemäße Verfahren erhältliche beinhaltende Spülzusammensetzung kann zu allen dem Fachmann bekannten Reinigungsvorgängen, die im Bereich der Erdreichbohrungen auftreten, sowohl bei off-shore-Bohrungen als auch bei Bohrungen an Land, verwendet werden. Dazu gehört insbesondere die Entfernung von Paraffinablagerungen von Bohrlochwänden. Üblicherweise werden Bohrlöcher gereinigt, indem eine Reinigungsflüssigkeit unter Druck durch das Bohrloch gepumpt wird und durch die Reinigungsflüssigkeit die Ablagerungen von den Wänden des Bohrlochs entfernt werden. Anschließend werden die Verunreinigungen mit der Flüssigkeit aus dem Bohrloch transportiert.

Als Bohreinrichtungen, deren Oberfläche mit der die erfindungsgemäße Emulsion oder die durch das Verfahren erhältliche Emulsion beinhaltenden Spülzusammensetzung gereinigt werden können, kommen insbesondere Bohrgeräte, wie beispielsweise der Bohrturm, der Bohrstrang, insbesondere das Bohrgestänge und der Bohrmeißel, Reinigungsanlagen, Anlage zur Feststoffentsorgung, insbesondere Schüttelsiebe oder Zentrifugen, Pumpen, Motoren oder Getriebe, oder aber die Bohrplattform oder Teile davon in Betracht.

Die Erfindung wird nun anhand nicht limitierender Beispiele näher erläutert.

VERGLEICHSBEISPIEL 1

Es wird eine herkömmliche Emulsion der folgenden Zusammensetzung eingesetzt:

Tabelle 1:

| Komponente | Menge in [Gew.-%] |
|---|---|
| Alkylpolyglykosid (MW < 600 g/mol)[1] | 27,1 |
| Glycerinmonooleat[2] | 8,5 |
| Methylester[3] | 29,4 |

(fortgesetzt)

| Komponente | Menge in [Gew.-%] |
|---|---|
| Wasser | 34,7 |
| Zitronensäure | 0,25 |
| 1) Terradril® S 853 B (ist eine 62 gew.-%ige wässrige Lösung)<br>2) Synative® ES GMO<br>3) Pemil® MeTiO5 | |

Zur Herstellung der Emulsion wird eine Mischung aus dem Wasser und der Zitronensäure hergestellt. Anschließend werden das Alkylpolyglykosid, das Glycerinmonooleat und der Methylester bei 21°C unter Rühren zugegeben und mittels eines Magnetrührers homogenisiert. Es wurde eine Emulsion erhalten.

Die vorstehend beschriebene Emulsion liegt als eine milchige Emulsion vor.

BEISPIEL 1

Der im Vergleichsbeispiel beschriebenen Emulsion werden 20,8 Gew.-% Dehydol® 04 (mit 4 Ethylenoxid-Einheiten ethoxylierter $C_8$-Fettalkohol der Firma Cognis) (bezogen auf das Gesamtgewicht der dann erhaltenen Mikroemulsion) unter Rühren zugesetzt. Anschließend wird erneut homogenisiert. Man erhält eine klare Emulsion.

BEISPIEL 2

Einer Emulsion, welche der im Vergleichsbeispiel beschriebenen Emulsion sehr ähnlich ist, werden 20,3 Gew.-% mit 6 Ethylenoxid-Einheiten alkoxylierter Decylalkohol(bezogen auf das Gesamtgewicht der dann erhaltenen Mikroemulsion) unter Rühren zugesetzt (Produkt Lutensol® XL 60 von der BASF AG, Ludwigshafen). Anschließend wird erneut homogenisiert. Man erhält eine klare Emulsion.

BEISPIEL 3

Einer Emulsion, welche der im Vergleichsbeispiel beschriebenen Emulsion sehr ähnlich ist, werden 24,9 Gew.-% mit 5 Ethylenoxid-Einheiten und 4 Propylenoxid-Einheiten alkoxylierter $C_{12-14}$ Fettalkohol bezogen auf das Gesamtgewicht der dann erhaltenen Mikroemulsion) unter Rühren zugesetzt (Produkt Dehypon® LS 54 von Cognis, Düsseldorf). Anschließend wird erneut homogenisiert. Man erhält eine klare Emulsion.

BESTIMMUNG DES REINIGUNGSEFFEKTES UND DER LAGERUNGSSTABILITÄT

Bei den im Vergleichsbeispiel und in den Beispielen 1 bis 3 erhaltenen Mikroemulsionen werden der Reinigungseffekt und die Lagerungsstabilität bestimmt.

Zur Bestimmung des Reinigungseffektes werden in einem ausgewogenen Mixbecher etwa 12 g eines Testschlammes eingewogen und mit einem Pinsel bis etwas unter die 350 ml-Marke homogen eingestrichen. Das nach dem Pinselauftragen verbleibende Gewicht stellt die effektive Einwage dar.

Zum Reinigen der Bohrspülung werden 500 ml einer 5 %igen Waschlösung hergestellt. Mit einem Messzylinder werden 250 ml der 5 %igen Reinigungslösung in den Mixbecher gegeben und 3 Minuten mittels eines Rührers (propeller-Rührer) gerührt. Die Geschwindigkeit sollte ca. 700 UpM betragen. Es wird zweimal kurz mit der Hand geschwenkt und die Bohrspülung wird zusammen mit der Reinigungslösung ausgeschüttet. Der Mixbecher wird sodann mit der Öffnung nach untern für 2 Minuten auf ein Filterpapier gestellt und anschließend gewogen. Es wird das verbleibende Gewicht notiert.

Für das zweite Waschen werden erneut 250 ml frischer Reinigungslösung entlang des Becherrandes hinzugegeben. Der Waschvorgang wird 3 Minuten wiederholt und der Becher erneut auf das Filterpapier gestellt. Zum Schluss wird das Gewicht des Mixbechers bestimmt.

Der Reinigungseffekt R (angegeben in %) wird wie folgt berechnet:

$$\frac{(B-T) \times 100}{E} - 100 = R$$

wobei

B das Brutto-Gewicht nach der ersten bzw. zweiten Waschung,

T das Tara-Gewicht des Mixbechers und

E die Einwaage der Bohrspülung

ist.

Neben dem Reinigungseffekt wurde auch die Lagerungsstabilität nach vierstündiger Lagerung bei 0°C und bei fünftägiger Lagerung bei 4°C sowie unmittelbar nach der Herstellung bestimmt.

Die Ergebnisse sind der folgenden Tabelle zu entnehmen:

Tabelle 3

|  | Vergleichsbeispiel | Beispiel 1 | Beispiel 2 | Beispiel 3 |
|---|---|---|---|---|
| % Produkt in Lösung | 5 | 5 | 5 | 5 |
| Reinigungseffekt 1. Waschung | 48,2 | 74,1 | 62,4 | 64,3 |
| Reinigungseffekt 2. Waschung | 56,4 | 88,1 | 78,8 | 79,4 |
|  |  |  |  |  |
| Aussehen nach Herstellung | Weiße Emulsion, inhomogen | klare Mikroemulsion | n. b. | n. b. |
| Aussehen nach 4h bei 0°C | 2 Phasen, ¼ oben (klar), unten weiß | klare Mikroemulsion | n. b. | n. b. |
| Aussehen nach 5 Tagen bei -4°C | 2 Phasen, ¼ oben (klar), unten weiß | klare Mikroemulsion | n. b. | n. b. |
| Aussehen nach 3,5 Monaten Lagerung bei 22°C |  | Klares, stabiles Produkt | klares, stabiles Produkt | klares, stabiles Produkt |

**Patentansprüche**

1.    Eine Emulsion bestehend aus einer Ölphase und einer wässrigen Phase und beinhaltend als Emulsionskomponenten

   ($\alpha$1) 15 bis 40 Gew.-% mindestens eines mit Wasser nicht mischbaren, organischen Lösungsmittels als Lösungsmittel der Ölphase,
   ($\alpha$2) 15 bis 40 Gew.-% Wasser als Lösungsmittel der wässrigen Phase,
   ($\alpha$3) 10 bis 40 Gew.-% mindestens eines oberflächenaktiven Mittels,
   ($\alpha$4) 10 bis 40 Gew.-% eines alkoxylierten Fettalkohols, sowie
   ($\alpha$5) 0 bis 25 Gew.-% mindestens eines weiteren Additives, wobei die Gewichtsmengen der Komponenten ($\alpha$1) bis ($\alpha$5) jeweils auf das Gesamtgewicht der Emulsion bezogen sind und zusammen 100 Gew.-% ergeben, wobei das mindestens eine oberflächenaktive Mittel ($\alpha$3) ausgewählt ist aus der Gruppe bestehend aus Alkylpolyglykosiden, Mono-, Di- oder Triestern aus Glycerin und Fettsäuren und Mischungen aus mindestens zwei dieser Verbindungen.

2.    Die Emulsion nach Anspruch 1, wobei das mit Wasser nicht mischbare, organische Lösungsmittel ($\alpha$1) ein Ester aus einer Fettsäure und einem Alkohol ist.

3.    Die Emulsion nach Anspruch 2, wobei das mit Wasser nicht mischbare, organische Lösungsmittel ($\alpha$1) ein Ester

aus einer Fettsäure und Methanol ist.

4. Die Emulsion nach einem der vorhergehenden Ansprüche, wobei das mindestens eine oberflächenaktive Mittel ($\alpha$3) ein nichtionisches Tensid ist.

5. Die Emulsion nach einem der vorhergehenden Ansprüche, wobei das oberflächenaktive Mittel ($\alpha$3) eine Mischung aus einem Alkylpolyglykosiden und einem Monoester aus Glycerin und einer Fettsäuren ist.

6. Die Emulsion nach einem der vorhergehenden Ansprüche, wobei die Emulsion eine Mikroemulsion aufweisend eine Tropfengrösse der diskontinuierlichen Phase von weniger als 0,3 $\mu$m ist.

7. Die Emulsion nach einem der vorhergehenden Ansprüche, wobei die Emulsion eine Wasser-in-Öl-Emulsion ist.

8. Die Emulsion nach einem der Ansprüche 1 bis 6, wobei die Emulsion eine Öl-in-Wasser-Emulsion ist.

9. Die Emulsion nach einem der vorhergehenden Ansprüche, wobei der alkoxylierte Fettalkohol ($\alpha$4) ein Fettalkohol mit einer Alkylenoxid-Einheit ist.

10. Die Emulsion nach Anspruch 9, wobei der alkoxylierte Fettalkohol ein mit 2 bis 8 Mol Ethylenoxid pro Mol Fettalkohol ethoxylierter Fettalkohol ist.

11. Die Emulsion nach einem der vorhergehenden Ansprüche, wobei der alkoxylierte Fettalkohol ($\alpha$4) auf einem C6- bis C 18-Fettalkohol basiert.

12. Die Emulsion nach einem der Ansprüche 9 bis 11, wobei der alkoxylierte Fettalkohol ($\alpha$4) auf einem mit 6 Ethylenoxid-Einheiten alkoxylierten C8- bis C14-Fettalkohol basiert.

13. Die Emulsion nach einem der Ansprüche 9 bis 11, wobei der alkoxylierte Fettalkohol ($\alpha$4) auf einem mit 5 Ethylenoxid-Einheiten und 4 Propylenoxid-Einheiten alkoxylierten C12- bis C14-Fettalkohol basiert.

14. Verwendung der Emulsion nach einem der Ansprüche 1 bis 13 als Additiv in einer Spülzusammensetzung zur Reinigung von Bohrlöchern, Bohreinrichtungen oder Bohrklein.

15. Die Verwendung nach Anspruch 14, wobei die Emulsion in einer Menge in einem Bereich von 1 bis 20 Gew.-% in der Spülzusammensetzung eingesetzt wird.

16. Die Verwendung nach Anspruch 14 oder 15, wobei die Spülzusammensetzung zu mindestens 50 Gew.-%, bezogen auf das Gesamtgewicht der Spülzusammensetzung, auf Wasser basiert.

**Claims**

1. Emulsion consisting of an oil phase and an aqueous phase, and including, as emulsion components,

($\alpha$1) 15 to 40% by weight of at least one water-immiscible organic solvent as solvent for the oil phase,
($\alpha$2) 15 to 40% by weight of water as solvent for the aqueous phase,
($\alpha$3) 10 to 40% by weight of at least one surfactant,
($\alpha$4) 10 to 40% by weight of an alkoxylated fatty alcohol, and
($\alpha$5) 0 to 25% by weight of at least one further additive, wherein the weights of components ($\alpha$1) to
($\alpha$5) are each based on the total weight of the emulsion and together add up to 100% by weight, wherein the at least one surfactant ($\alpha$3) is selected from the group consisting of alkyl polyglycosides, mono-, di- or triesters of glycerol and fatty acids, and mixtures of at least 2 of these compounds.

2. Emulsion according to Claim 1, wherein the water-immiscible organic solvent ($\alpha$1) is an ester of a fatty acid and an alcohol.

3. Emulsion according to Claim 2, wherein the water-immiscible organic solvent ($\alpha$1) is an ester of a fatty acid and methanol.

4. Emulsion according to any of the preceding claims, wherein the at least one surfactant ($\alpha$3) is a nonionic surfactant.

5. Emulsion according to any of the preceding claims, wherein the surfactant ($\alpha$3) is a mixture of an alkyl polyglycoside and a monoester of glycerol and a fatty acid.

6. Emulsion according to any of the preceding claims, wherein the emulsion is a microemulsion having a droplet size of the discontinuous phase of less than 0.3 $\mu$m.

7. Emulsion according to any of the preceding claims, wherein the emulsion is a water-in-oil emulsion.

8. Emulsion according to any of Claims 1 to 6, wherein the emulsion is an oil-in-water emulsion.

9. Emulsion according to any of the preceding claims, wherein the alkoxylated fatty alcohol ($\alpha$4) is a fatty alcohol having an alkylene oxide unit.

10. Emulsion according to Claim 9, wherein the alkoxylated fatty alcohol is a fatty alcohol ethoxylated with 2 to 8 mol of ethylene oxide per mol of fatty alcohol.

11. Emulsion according to any of the preceding claims, wherein the alkoxylated fatty alcohol ($\alpha$4) is based on a C6 to C18 fatty alcohol.

12. Emulsion according to any of Claims 9 to 11, wherein the alkoxylated fatty alcohol ($\alpha$4) is based on a C8 to C14 fatty alcohol alkoxylated with 6 ethylene oxide units.

13. Emulsion according to any of Claims 9 to 11, wherein the alkoxylated fatty alcohol ($\alpha$4) is based on a C12 to C14 fatty alcohol alkoxylated with 5 ethylene oxide units and 4 propylene oxide units.

14. Use of the emulsion according to any of Claims 1 to 13 as an additive in a drilling composition for cleaning of wells, drilling equipment or borehole cuttings.

15. Use according to Claim 14, wherein the emulsion is used in an amount in the range from 1 to 20% by weight in the drilling composition.

16. Use according to Claim 14 or 15, wherein the drilling composition is based on water to an extent of at least 50% by weight, based on the total weight of the drilling composition.

## Revendications

1. Emulsion constituée par une phase huileuse et une phase aqueuse et comprenant, comme composants d'émulsion

($\alpha$1) 15 à 40% en poids d'au moins un solvant organique, non miscible à l'eau, comme solvant de la phase huileuse,
($\alpha$2) 15 à 40% en poids d'eau comme solvant de la phase aqueuse,
($\alpha$3) 10 à 40% en poids d'au moins un agent tensioactif,
($\alpha$4) 10 à 40% en poids d'un alcool gras alcoxylé, ainsi que
($\alpha$5) 0 à 25% en poids d'au moins un autre additif, les quantités pondérales des composants ($\alpha$1) à ($\alpha$5) se rapportant à chaque fois au poids total de l'émulsion et représentant ensemble 100% en poids, ledit au moins un agent tensioactif ($\alpha$3) étant choisi dans le groupe constitué par les alkylpolyglycosides, les monoesters, diesters ou triesters de glycérol et d'acides gras et les mélanges formés par au moins deux de ces composés.

2. Emulsion selon la revendication 1, le solvant organique, non miscible à l'eau ($\alpha$1) étant un ester d'un acide gras et d'un alcool.

3. Emulsion selon la revendication 2, le solvant organique, non miscible à l'eau ($\alpha$1) étant un ester d'un acide gras et de méthanol.

4. Emulsion selon l'une quelconque des revendications précédentes, ledit au moins un agent tensioactif ($\alpha$3) étant un

agent tensioactif non ionique.

5. Emulsion selon l'une quelconque des revendications précédentes, ledit au moins un agent tensioactif ($\alpha$3) étant un mélange d'un alkylpolyglycoside et d'un monoester de glycérol et d'un acide gras.

6. Emulsion selon l'une quelconque des revendications précédentes, l'émulsion étant une microémulsion présentant une grosseur de gouttes de la phase discontinue inférieure à 0,3 $\mu$m.

7. Emulsion selon l'une quelconque des revendications précédentes, l'émulsion étant une émulsion eau-dans-huile.

8. Emulsion selon l'une quelconque des revendications 1 à 6, l'émulsion étant une émulsion huile-dans-eau.

9. Emulsion selon l'une quelconque des revendications précédentes, l'alcool gras alcoxylé ($\alpha$4) étant un alcool gras avec une unité d'oxyde d'alkylène.

10. Emulsion selon la revendication 9, l'alcool gras alcoxylé étant un alcool gras éthoxylé par 2 à 8 moles d'oxyde d'éthylène par mole d'alcool gras.

11. Emulsion selon l'une quelconque des revendications précédentes, l'alcool gras alcoxylé ($\alpha$4) étant à base d'un alcool gras en $C_6$-$C_{18}$.

12. Emulsion selon l'une quelconque des revendications 9 à 11, l'alcool gras alcoxylé ($\alpha$4) étant à base d'un alcool gras en $C_8$-$C_{14}$ alcoxylé par 6 unités d'oxyde d'éthylène.

13. Emulsion selon l'une quelconque des revendications 9 à 11, l'alcool gras alcoxylé ($\alpha$4) étant à base d'un alcool gras en $C_{12}$-$C_{14}$ alcoxylé par 5 unités d'oxyde d'éthylène et 4 unités d'oxyde de propylène.

14. Utilisation de l'émulsion selon l'une quelconque des revendications 1 à 13 comme additif dans une composition de rinçage pour le nettoyage de trous de forage, de dispositifs de forage ou de déblais de forage.

15. Utilisation selon la revendication 14, l'émulsion étant utilisée en une quantité dans une plage de 1 à 20% en poids dans la composition de rinçage.

16. Utilisation selon la revendication 14 ou 15, la composition de rinçage étant à raison d'au moins 50% en poids, par rapport au poids total de la composition de rinçage, à base d'eau.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0386636 A
- EP 0374671 A
- EP 0374672 A
- WO 9429570 A
- WO 9517244 A
- WO 9819043 A
- WO 2006007977 A
- US 2004082483 A1
- WO 9818881 A1
- DE 19643857 A1
- WO 0142387 A
- EP 0787706 A1
- DE 4018228 A1